# EUROPÄISCHE PATENTSCHRIFT

(11) **EP 2 556 246 B1**
(45) Veröffentlichungstag und Bekanntmachung des Hinweises auf die Patenterteilung: **14.01.2015**
(21) Anmeldenummer: 12723681.8
(22) Anmeldetag: 24.05.2012
(51) Int. Cl.: F03D 7/02, F03D 11/00

(54) **VERFAHREN ZUM BETREIBEN EINER WINDENERGIEANLAGE UNTER VEREISUNGSBEDINGUNGEN**
METHOD OF OPERATING A WIND TURBINE UNDER ICING CONDITIONS
PROCÉDÉ DE FONCTIONNEMENT D'UNE ÉOLIENNE DANS DES CONDITIONS DE GIVRAGE

(30) Priorität: 07.06.2011 DE 102011077129
(43) Veröffentlichungstag der Anmeldung: 13.02.2013
(73) Patentinhaber: Wobben Properties GmbH, 26605 Aurich (DE)
(72) Erfinder: JEPSEN, Torsten, 26603 Aurich (DE)
(74) Vertreter: Eisenführ Speiser
(86) Internationale Anmeldenummer: PCT/EP2012/059769
(87) Internationale Veröffentlichungsnummer: WO 2012/168089

(56) Entgegenhaltungen:
- EP-A2- 2 055 940
- EP-A2- 2 112 373
- WO-A1-2004/104412
- WO-A2-2011/131522
- AU-A1- 2009 339 713
- US-A1- 2011 089 692

## Beschreibung

Die vorliegende Anmeldung betrifft ein Verfahren zum Betreiben einer Windenergieanlage sowie eine entsprechende Windenergieanlage als auch einen Windpark mit mehreren Windenergieanlagen.

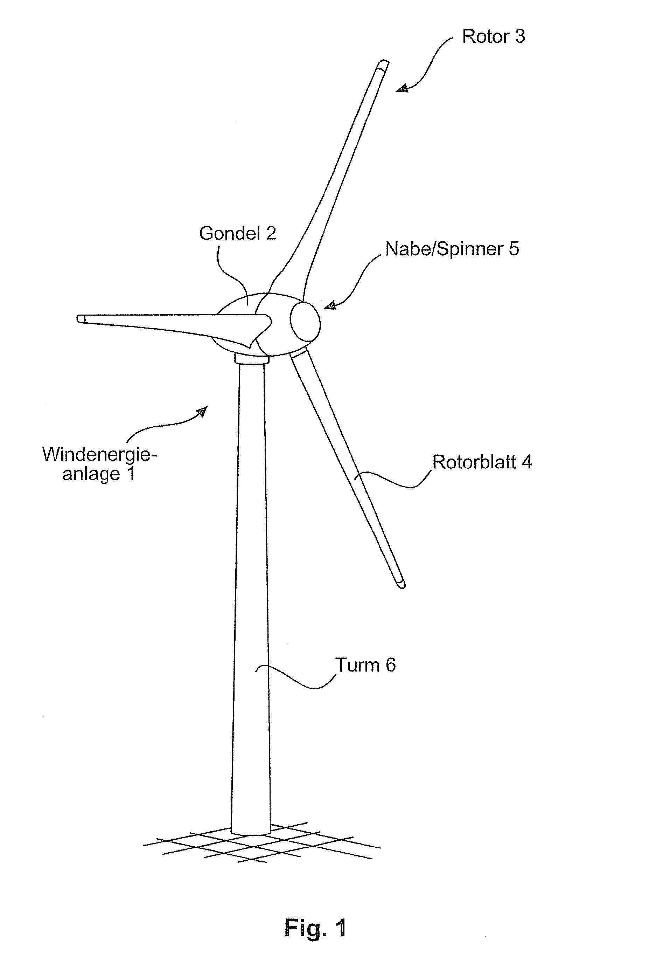

Verfahren zum Betreiben einer Windenergieanlage sind allgemein bekannt und die vorliegende Anmeldung geht insbesondere aus von einer Windenergieanlage gemäß Fig. 1, die eine Gondel mit Rotor und Rotorblättern an einer Nabe aufweist, wobei die Gondel drehbar auf einem Turm gelagert ist. Im Betrieb der Windenergieanlage wirkt der Wind auf die Rotorblätter und erzeugt dadurch eine Drehbewegung, die in der Gondel mittels eines Generators elektrische Energie erzeugt. Insbesondere wird von Windenergieanlagen mit Rotorblättern mit verstellbarem Rotorblattwinkel, so genannte Pitch-geregelte Windenergieanlagen ausgegangen.

Bei Aufstellungsorten von Windenergieanlagen, bei denen auch Temperaturen um den Gefrierpunkt auftreten können, besteht die Gefahr, dass die Windenergieanlage, insbesondere die Rotorblätter vereisen. An Rotorblättern von Windenergieanlagen kann es somit bei bestimmten Witterungsverhältnissen zur Bildung von Eis, Raureif oder Schneeablagerungen kommen. Voraussetzungen sind in der Regel eine hohe Luftfeuchtigkeit bzw. Regen oder Schneefall bei Temperaturen kurz unterhalb des Gefrierpunkts. Die häufigsten Vereisungstemperaturen liegen dabei im Bereich von -1°C bis -4°C. Über +1°C und unter -7°C tritt gewöhnlich keine Vereisung auf. Bei tieferen Temperaturen ist die verfügbare Luftfeuchtigkeit in der Luft zu gering.

Während Eis- und Reifablagerungen Stärken erreichen können, von der bei Abwurf eine Gefährdung für Personen und Sachen ausgehen kann, stellen lose Schneeablagerungen, die sich bei Schneefall an an der Regel unbedeutenden Bereichen des Rotorblatts, wie z.B. dem Flansch anlagern, normalerweise keine Gefahr dar.

Problematisch bei Windenergieanlagen ist insbesondere die Gefahr durch einen Eiswurf bzw. Eisabwurf. Bei Betrieb einer Windenergieanlage mit vereisten Rotorblättern kann es durch das Abschleudern von Eisstücken zu einer Gefährdung der näheren Umgebung kommen. Bei Stillstand einer Windenergieanlage unterscheidet sich die Gefährdung durch Ablösung von Schnee- und Vereisungsstücken der Windenergieanlage nicht wesentlich von der Gefährdung durch andere hohe Bauwerke.

Ein Verfahren zum Betreiben einer Windenergieanlage unter Berücksichtigung der Möglichkeit einer Vereisung ist in der deutschen Offenlegungsschrift DE 103 23 785 A1 beschrieben. Dort werden Betriebsparameter wie beispielsweise die Leistung der Windenergieanlage abhängig von einer Randbedingung wie der Windgeschwindigkeit im Grunde mit Sollwerten verglichen, die bei der jeweiligen Windgeschwindigkeit auftreten. Aus Abweichungen zwischen dem erfassten Betriebsparameter und dem vorgesehen Betriebsparameter lässt sich auf einen Eisansatz schließen und es können entsprechende Schutzmaßnahmen eingeleitet werden, insbesondere gehört hierzu das Anhalten der Windenergieanlage.

Dieser Vorgehensweise liegt die Erkenntnis zugrunde, dass ein Eisansatz an den Rotorblättern die Aerodynamik der Blätter und damit des Rotors beeinflusst, wodurch sich Abweichungen im Anlagenverhalten ergeben. Diese werden durch den beschriebenen Vergleich der Betriebsparameter erkannt und ausgewertet.

Problematisch hierbei ist, dass diese Art der Fassung einen möglichst stationären, stabilen und möglichst gleichmäßigen Betrieb der Windenergieanlage voraussetzt.

Bei Schwachwind, der etwa bei Windgeschwindigkeiten unterhalb von 3 oder 4 m/s angenommen wird, liegen solche idealen Bedingungen aber häufig nicht vor. Bei Starkwind, der meist bei Windgeschwindigkeiten ab 20 m/s oder 25 m/s angenommen wird, ist die Empfindlichkeit solcher bekannter Verfahren oft nicht ausreichend. Entsprechend sind etwaige Eisansatzauswertungen nicht sehr verlässlich oder sogar unmöglich.

Ein ähnliches Problem ergibt sich, wenn die Windenergieanlage zum Stillstand gekommen ist, weil im Stillstand keine Betriebsparameter sinnvoll mit vorgegebenen Betriebsparametern verglichen werden können. Dabei kann die Windenergieanlage aus ganz unterschiedlichen Gründen zum Stillstand gekommen sein. Hierzu gehört ein Anhalten aufgrund zu schwachen Windes, ein Anhalten aufgrund zu starken Windes, ein Anhalten zu Wartungszwecken und auch ein Anhalten aufgrund eines Netzausfalls des angeschlossenen elektrischen Stromnetzes, in das die Windenergieanlage einspeist und aus dem die Windenergieanlage Energie zum Aufrechterhalten ihrer Betriebsführung entnimmt. Im Übrigen kommt auch ein Anhalten der Windenergieanlage aufgrund eines erkannten Eisansatzes in Betracht.

Aus AU 2009 339 713 A1 ist des Weiteren ein Verfahren zum Betreiben einer Windenergieanlage bekannt, bei dem die Vereisungsmenge an den Rotorflügeln gemessen wird. Übersteigt die Vereisungsmenge, welche z.B. über die Verformung der Rotorflügel gemessen wird, einen ersten Grenzwert, geht die Windenergieanlage in den Leerlaufbetrieb mit deutlich verringerter Drehzahl. Wird ein zweiter Grenzwert für die Vereisungsmenge überschritten, stoppt die Windenergieanlage vollständig. Das Anhalten der Windenergieanlage erfolgt nach Eintreten eines konkreten Ereignisses, nämlich einem Erfassen eines Eisansatzes an den Rotorblättern.

Der vorliegenden Erfindung liegt somit die Aufgabe zugrunde, wenigstens eines der oben genannten Probleme zu adressieren. Insbesondere soll eine Eisansatzerkennung bzw. Eiserkennung verbessert werden, so dass auch außerhalb eines bisher sicheren Erkennungsbereichs einer Windenergieanlage eine Eisansatzerkennung durchgeführt werden kann. Zumindest soll aber eine alternative Ausführung gefunden werden.

Erfindungsgemäß wird somit ein Verfahren zum Betreiben einer Windenergieanlage gemäß Anspruch 1 vorgeschlagen.

Demnach wird eine Windenergieanlage mit einer Gondel mit einem elektrischen Generator zum Erzeugen elektrischen Stroms und einem mit dem Generator gekoppelten aerodynamischen Rotor mit einem oder mehreren Rotorblättern zugrunde gelegt.

Eine solche Windenergieanlage wird in grundsätzlich bekannter Art und Weise betrieben, wobei sich nämlich der Rotor dreht wenn ein Eisansatz an den Rotorblättern sicher ausgeschlossen werden kann. Dies ist insbesondere dann der Fall, wenn die Umgebungstemperatur hoch, insbesondere deutlich über +2°C ist. Aber auch bei Niedrigtemperaturen um den Gefrierpunkt wird ein Eisansatz ausgeschlossen, wenn die Betriebsparameter im Betrieb der Windenergieanlage den jeweils zu erwartenden Wert aufweisen. Das bedeutet insbesondere, dass im Teillastbereich, wenn also nicht genug Wind zum Betreiben der Windenergieanlage mit Nennleistung zur Verfügung steht, die von der Windenergieanlage erzeugte Leistung der bei der vorherrschenden Windgeschwindigkeit erwarteten Leistung entspricht. Im Volllastbereich, wenn also aufgrund des vorherrschenden Windes die Windenergieanlage mit Nennleistung betrieben werden kann, bedeutet dies, dass bei einer Pitch-geregelten Windenergieanlage der eingestellte Rotorblattwinkel dem bei der vorherrschenden Windgeschwindigkeit zu erwartenden Rotorblattwinkel entspricht.

Wird hingegen ein Eisansatz an den Rotorblättern erkannt, so wird die Windenergieanlage angehalten. Ein Eisansatz wird beispielsweise dadurch erkannt, dass bei Vorliegen einer Umgebungstemperatur, die einen Eisansatz möglich macht, nämlich insbesondere bei einer Umgebungstemperatur unter +2°C, Abweichungen zwischen der tatsächlichen und der erwarteten Leistung bzw. Abweichungen zwischen dem tatsächlichen und dem erwarteten Rotorblattwinkel vorliegen, die auf einen Eisansatz schließen lassen. Im Teillastbereich ist dies üblicherweise dann der Fall, wenn die tatsächliche Leistung deutlich unter der erwarteten Leistung liegt, weil davon auszugehen ist, dass der Eiseinsatz den Wirkungsgrad der Windenergieanlage verringert. Also das Verhältnis der von der Windenergieanlage erzeugten elektrischen Leistung zu der im vorherrschenden Wind bereitgestellten Leistung. Eine andere Erkennungsmethode eines Eisansatzes ist z.B. die Überwachung der Eigenfrequenz der Rotorblätter im Betrieb. Auch das basiert auf Voraussetzungen, die nicht immer ausreichend vorliegen. Es sind noch weitere Verfahren bekannt, die ebenfalls an ihre Grenzen stoßen können. Hierzu gehört, um ein weiteres Beispiel zu nennen, ein optisches Verfahren, dass bei Nebel oder nachts schlecht einsetzbar ist.

Wenn nun ein Eisansatz nicht erkannt wurde, aber zu erwarten ist, als nicht auszuschließen ist, wird vorgeschlagen, die Windenergieanlage zeitverzögert anzuhalten. Es wurde oben beschrieben, wann ein Eisansatz erkannt wird. Zu erwarten ist er insbesondere dann, wenn die Umgebungstemperatur unterhalb einer Grenztemperatur liegt, insbesondere unterhalb von +2°C. Zwar dürfte sich bei +2°C noch kein Eis bilden, aber um Risiken durch eine Nichterkennung oder Nichtberücksichtigung eines möglichen Eisansatzes auszuschließen, wird vorgeschlagen, diesen relativ hohen Wert von +2°C zugrunde zu legen. Hierdurch wird auch berücksichtigt, dass Messunsicherheiten auftreten können, dass die Temperaturmessung nicht unmittelbar am potentiellen Ort der Vereisung erfolgt und auch, dass durch Strömungsbedingungen die Temperatur beeinflusst wird, Alternativ kann auch ein anderer Wert, insbesondere ein Grenzwert von +1°C oder +3°C oder +4°C angesetzt werden.

Erfindungsgemäß wurde erkannt, dass ein Anhalten der Windenergieanlage im Falle eines nicht erkannten, aber zu erwartenden oder nicht auszuschließenden Eisansatzes die Sicherheit für Personen und Sachen im Bereich der Windenergieanlage erhöht, wobei die sich ergebenden Ertragseinbußen verhältnismäßig gering ausfallen, gemessen an der Gesamtjahresleistung der Windenergieanlage. Dies liegt insbesondere daran, dass ein solches Anhalten bei sehr hohen Windgeschwindigkeiten erfolgt, die aber selten auftreten, oder bei sehr geringen Windgeschwindigkeiten auftreten, bei denen ohnehin wenig Ertrag erbracht werden kann.

Erfindungsgemäß wurde zudem auch erkannt, dass es erst bei stärkeren Eisdicken zum Abschleudern einzelner Eisstücke kommt und daher ein Anhalten bzw. Verhindern eines Wiederanlaufs der Windenergieanlage nicht sofort erfolgen muss und vielmehr zeitverzögert erfolgen kann. Hierdurch werden etwaige Ertragseinbußen verringert, mitunter signifikant verringert.

Dabei können das Anhalten der Windenergieanlage und das Verhindern eines Wiederanlaufs unter den gleichen Voraussetzungen vorgenommen werden. Ein zeitverzögertes Verhindern eines Wiederanlaufs der Windenergieanlage kann dabei bedeuten, dass eine angehaltene Windenergieanlage aufgrund der Zeitverzögerung zunächst nicht am Wiederanlauf gehindert wird. Sie läuft also wieder an und gegebenenfalls kommt sie dann - innerhalb der Zeitverzögerung - in einen Arbeitspunkt, in dem es möglich ist, einen Eisansatz sicher, insbesondere sicherer als im Stillstand, zu erkennen. Gelingt es hierbei, sicher zu erkennen, dass kein Eisansatz vorliegt, hat diese Zeitverzögerung im Ergebnis dazu geführt, dass die Windenergieanlage wieder angelaufen ist und normal arbeitet und entsprechenden Ertrag bringt. Ohne Zeitverzögerung hätte die Gefahr bestanden, dass die Anlage nicht anläuft, eine Eisfreiheit nicht erkannt würde und die Anlage somit zunächst dauerhaft im Stillstand verbleiben würde.

In der vorliegenden Anmeldung ist unter einem Anhalten einer Windenergieanlage - sofern es nicht anders deutlich gemacht wird - zu verstehen, dass diese den Rotor stoppt, allenfalls im Trudelbetrieb laufen lässt. Das Betriebsführungssystem bleibt hierbei jedoch in Betrieb, es sei denn, es treten weitere Störungen wie beispielsweise ein Netzausfall hinzu, die ein Aufrechterhalten des Betriebsführungssystems verhindern. Bei Netzausfall werden Zustandsdaten bis zur Netzrückkehr gespeichert.

Die Zeitverzögerung startet von dem Zeitpunkt aus bzw. berücksichtigt diesen Zeitpunkt an dem ein Eisansatz zu erwarten war bzw. nicht ausgeschlossen werden konnten. Insbesondere kann die Zeitverzögerung in dem Moment beginnen, wenn die Umgebungstemperatur unter eine Grenztemperatur fällt.

Zusätzlich oder alternativ wird vorgeschlagen, dass eine angehaltene Windenergieanlage zeitverzögert wieder anläuft, wenn eine Anhaltebedingung - z.B. wegen Schattenwurfs, wegen einer Schwingungsüberwachung oder auch manuell wie z.B. zur Wartung - die zum Anhalten der Windenergieanlage geführt hat, wieder weggefallen ist, und ein Eisansatz weder erkannt wurde noch zu erwarten bzw. nicht auszuschließen ist. Die Zeitverzögerung beginnt zu dem Zeitpunkt bzw. berücksichtigt einen solchen Zeitpunkt, an dem die Bedingung vorliegt, dass ein Eisansatz nicht erkannt wurde und nicht zu erwarten ist. Das kann bedeuten, dass vor diesem Zeitpunkt ein Eisansatz zu erwarten war oder sogar vorlag. Es kann aber auch bedeuten, dass vor diesem Zeitpunkt unklar war, was für eine Situation vorliegt. Die Zeitverzögerung wird somit vorgeschlagen, um zu berücksichtigen, dass obwohl ein Eisansatz nicht erkannt wurde und nicht zu erwarten ist, noch Resteis vorhanden sein könnte. Mitunter deuten die beobachteten Bedingungen nur darauf hin, dass die Bildung eines Eisansatzes nicht zu erwarten ist, über das Vorhandensein eines Eisansatzes aber nur schwierig oder gar keine Aussage gemacht werden kann. Insbesondere liegt eine solche Bedingung vor, wenn Umgebungstemperaturen über, insbesondere geringfügig über einer Grenztemperatur wie beispielsweise 2°C liegt. Bei einer höheren Temperatur, insbesondere über 2°C ist mit einer Eisbildung nicht zu rechnen. Lag aber bis vor kurzem ein Eisansatz vor, kann dieses möglicherweise noch zumindest zu einem Teil vorhanden sein. Insbesondere für diesen Fall führt die Zeitverzögerung dazu, dass etwaige Eisansatzreste abtauen können.

Erfindungsgemäß erfolgt zudem das Anhalten bzw. Verhindern des Wiederanlaufs der Windenergieanlage und auch oder alternativ das Wiederanlaufenlassen der Windenergieanlage abhängig von einem Eisverdachtsindikator. Der Eisverdachtsindikator, der auch einfach als Indikator bezeichnet werden kann, bildet ein Maß für die Wahrscheinlichkeit eines Eisansatzes und wird entsprechend bestimmt bzw. verändert. Der Eisverdachtsindikator wird dabei so bestimmt oder verändert, dass er einen Hinweis auf eine Wahrscheinlichkeit geben kann bzw. so verwendet wird, ohne dass er einen Wahrscheinlichkeitswert im mathematischen Sinne darstellen muss. Nachfolgend wird der Eisverdachtsindikator insbesondere so erläutert, dass ein großer Wert auf eine hohe Wahrscheinlichkeit eines Eisansatzes und ein geringer Wert auf eine geringe Wahrscheinlichkeit eines Eisansatzes hindeutet. Der Fachmann kann anhand der erfindungsgemäßen Lehre dies genauso gut umgekehrt vorsehen und umsetzen.

Der Eisverdachtsindikator wird gemäß der Erfindung abhängig von Betriebsparametern und/oder abhängig von Umgebungsbedingungen bestimmt und kann abhängig von diesen auch verändert werden. Vorzugsweise wird die Zeit berücksichtigt. Es ist somit günstig, wenn der Eisverdachtsindikator so verändert wird, dass er von vorherigen Werten abhängt und davon, wie lange diese zurückliegen und/oder wie lange diese bereits angedauert haben.

Der Eisverdachtsindikator ist gemäß der Erfindung als Zähler ausgebildet. Hierunter fällt insbesondere eine Ausführung, bei der der Eisverdachtsindikator als in einem Prozessrechner implementierte Variable ausgeführt ist, die ihren Wert im Grunde innerhalb vorgegebener Grenzen beliebig erhöhen und verringern kann.

Der Eisverdachtsindikator verändert seinen Wert in eine erste Richtung, insbesondere wird dieser erhöht, wenn Umgebungsbedingungen und/oder Betriebsbedingungen der Windenergieanlage einen Eisansatz begünstigen und/oder auf einen Eisansatz hindeuten, insbesondere wenn die Umgebungstemperatur unter einer Grenztemperatur liegt. Diese Veränderung erfolgt insbesondere zeitabhängig, so dass sich der Wert mit zunehmender Zeit sukzessive oder kontinuierlich verändert. Wenn also insbesondere die Umgebungstemperatur unter einer Grenztemperatur wie +2°C liegt, nimmt dieser Wert mit der Zeit immer weiter zu, bis er einen so hohen Wert erreicht hat, der als Grenzwert hinterlegt sein kann und als Anhaltegrenzwert bezeichnet werden kann, bei dem die Windenergieanlage angehalten wird bzw. bei der die Windenergieanlage an einem Wiederanlauf gehindert wird. Befindet sich die Windenergieanlage beispielsweise in einem Zustand, in dem aufgrund vergangener Werte davon auszugehen ist, dass kein Eisansatz vorliegt und wechselt die Gesamtsituation zu Bedingungen, unter denen ein Eisansatz nicht mehr ausgeschlossen werden kann, so beginnt der Zähler sich langsam zu erhöhen. Bis er den Anhaltegrenzwert erreicht hat - falls er ihn überhaupt erreicht - vergeht eine Zeit, die auch von der Schnelligkeit der Erhöhung dieses Zählers abhängt.

Zusätzlich oder alternativ verändert der Zähler seine Werte in eine zweite Richtung, insbesondere werden diese nämlich verringert, wenn Umgebungsbedingungen oder Betriebsbedingungen der Windenergieanlage darauf hindeuten oder begünstigen, dass ein Eisansatz nicht vorliegt oder sich reduziert, insbesondere wenn die Umgebungstemperatur über der Grenztemperatur liegt.

Liegt also beispielsweise eine Situation vor, bei der von einem Eisansatz auszugehen ist oder dieser erfasst wurde, oder die Situation unklar ist, und ändert sich die Situation in eine Situation, bei der ein Eisansatz oder zumindest eine Eisansatzentstehung ausgeschlossen werden kann, so wird der Wert des Eisverdachtsindikators, also der Zählerwert allmählich mit der Zeit verringert. Er wird verringert, bis ein unterer Zählergrenzwert erreicht wird, insbesondere ein Wiederanlaufgrenzwert.

Die oben beschriebenen Vorgänge des Erhöhens oder Verringerns des Eisverdachtsindikators können einige Stunden bis hin zu 10 Stunden oder sogar länger dauern. In dieser Zeit kann sich eine Situation, die auf die Möglichkeit einer Eisbildung hindeutet und ein Erhöhen des Zählers zur Folge hat, in eine Situation ändern, in der von einer Verringerung eines Eisansatzes, insbesondere von einem Abtauen, ausgegangen werden kann oder in der sichere Werte vorliegen, die einen Eisansatz ausschließen lassen. Der Wert des Eisverdachtsindikators bzw. des Zählers wird dabei wieder verringert. Ebenso kann eine umgekehrte Situation auftreten, bei der der Zähler wieder hochgezählt wird. Situationsbedingt ändert sich somit die Richtung, in der sich der Wert des Eisverdachtsindikators ändert. Dadurch wird jeweils die zurückliegende Situation berücksichtigt. Es wird vorzugsweise also ein und derselbe Zähler für das Erhöhen und Verringern verwendet.

Gemäß der Erfindung erfolgt eine Veränderung des Wertes, also des Wertes des Eisverdachtsindikators als Zähler, mit einer von den Umgebungsbedingungen und/oder Betriebsbedingungen der Windenergieanlage abhängigen Geschwindigkeit. Demnach erhöht oder verringert sich der Wert also nicht mit der Zeit immer gleich, sondern berücksichtigt auch eine differenziertere Betrachtungsweise der vorliegenden Bedingungen.

Dabei wird der Wert bei vorherrschendem Schwachwind, also insbesondere Wind mit Windgeschwindigkeiten unter 4 m/s, langsamer erhöht, als bei vorherrschendem Starkwind, nämlich insbesondere bei Windgeschwindigkeiten von über 20 m/s, wenn die Anlage betrieben wird. Dem liegt die Erkenntnis zugrunde, dass sich bei sehr hohen Anströmgeschwindigkeiten am Rotorblatt, bedingt durch den Betrieb der Anlage bei hohen Windgeschwindigkeiten ein Eisansatz schneller bilden kann und somit die Zeit, bis die Windenergieanlage angehalten wird, kürzer sein sollte. Dies kann durch das schnellere Ansteigen des Wertes des Eisverdachtsindikators berücksichtigt werden, der somit schnell einen Anhaltegrenzwert erreicht. Es besteht aber auch die Möglichkeit, eine größere Zeitverzögerung bei vorherrschendem Schwachwind anderweitig als durch den Eisverdachtsindikator als Zähler zu realisieren, wie z.B. durch eine Referenztabelle bzw. Look-Up-Tabelle.

Gemäß der Erfindung wird zusätzlich oder alternativ eine Erhöhung des Wertes des Eisverdachtsindikators auch dann langsamer als bei Betrieb der Anlage bei vorherrschendem Starkwind vorgenommen, wenn die Windenergieanlage aufgrund eines automatischen Anlagenstopps wie bei Schattenwurfabschaltung oder Windmangel oder bei manuellem Anlagenstopp wie z.B. für Wartung angehalten wurde, unabhängig von der vorherrschenden Windgeschwindigkeit.

Eine weitere erfindungsgemäße Ausführungsform schlägt vor, zusätzlich oder alternativ den Wert des Eisverdachtsindikators als Zähler je langsamer zu verringern, je geringer die Umgebungstemperatur ist, insbesondere den Wert proportional zu einem Integral zu verringern, das aus der Zeit über eine Differenz der Umgebungstemperatur zur Grenztemperatur gebildet wird.

Daraus ergibt sich eine Zeitverzögerung, die umso geringer ist, je größer die Umgebungstemperatur ist. Mit anderen Worten kann die Windenergieanlage umso eher wieder anlaufen, umso wärmer es ist. Die Windenergieanlage mit einer umso geringeren Zeitverzögerung wieder anlaufen zu lassen, je größer die Umgebungstemperatur ist, kann auch anders als durch die Verwendung des Eisverdachtsindikators als Zähler umgesetzt werden. Beispielsweise kann eine Tabelle, ein so genannter Look-up-Table, vorgesehen sein, die Zeitverzögerungswerte für bestimmte Umgebungstemperaturen bereithält.

Eine weitere Ausführungsform ist dadurch gekennzeichnet, dass die Windenergieanlage an ein elektrisches Netz gekoppelt ist und im Falle eines Netzausfalls die Windenergieanlage angehalten wird und bei Netzwiederkehr, wenn also der Netzausfall behoben ist, ein Wiederanlaufen der Windenergieanlage abhängig von einer Bemessungstemperatur erfolgt, die von der Umgebungstemperatur bei Netzausfall und der Umgebungstemperatur bei Netzwiederkehr abhängt. Hier liegt der Gedanke zugrunde, dass für die Dauer des Netzausfalls, nämlich vom Beginn des Netzausfalls bis zur Netzwiederkehr Informationen zu Betriebsparametern und Umgebungsbedingungen, insbesondere der Umgebungstemperatur nicht oder nur eingeschränkt vorliegen. Um die Möglichkeit eines Eisansatzes nach Ende des Netzausfalls besser einschätzen zu können, wird ein Temperaturwert für die Umgebungstemperatur zugrunde gelegt, der von der Temperatur bei Netzwiederkehr, also der aktuellen Temperatur, und der letzten erfassten Umgebungstemperatur vor bzw. zu Beginn des Netzausfalls abhängt.

Vorzugsweise wird die Bemessungstemperatur als Mittelwert aus der Umgebungstemperatur zu Beginn des Netzausfalls und der Umgebungstemperatur bei Netzwiederkehr berechnet, wenn der Netzausfall nicht mehr als eine erste Ausfallzeit, insbesondere nicht mehr als zwei Stunden beträgt. Hier liegt die Erkenntnis zugrunde, dass sich die Umgebungstemperatur nicht zu schnell ändert und bei kleinen Ausfallzeiten eine Betrachtung der Umgebungstemperatur vor und nach Netzausfall bereits sinnvolle Informationen für die Wahrscheinlichkeit eines Eisansatzes liefern können. Beträgt beispielsweise die Umgebungstemperatur bei Netzwiederkehr 2°C, ist ein Eisansatz wahrscheinlich, wenn die Umgebungstemperatur zu Beginn des Netzausfalls deutlich darunter lag, wohingegen ein Eisansatz unwahrscheinlich ist, wenn die Umgebungstemperatur zu Beginn des Netzausfalls deutlich darüber lag.

Günstig ist es, bei längerem Netzausfall zur Bestimmung der Bemessungstemperatur, die auch als berechnete Temperatur bezeichnet werden kann, einen Temperatur-Sicherheitswert vorzusehen. So wird vorgeschlagen, die Bemessungstemperatur bei längerem Netzausfall, insbesondere bei Netzausfall über zwei Stunden, um 2 K zu verringern.

Gemäß einer Ausführungsform ist die Windenergieanlage in einem Windpark angeordnet und wird angehalten, wenn wenigstens eine weitere Windenergieanlage dieses Windparks wegen Eisansatz oder Verdacht auf Eisansatz angehalten wird. Dem liegt die Erkenntnis zugrunde, dass sich Windenergieanlagen jedenfalls hinsichtlich Eisansatz in demselben Park etwa ähnlich verhalten, weil insbesondere die Umgebungsparameter, wie Umgebungstemperatur, Luftfeuchtigkeit und Windgeschwindigkeit ähnlich sind. Dem liegt aber auch die Erkenntnis zugrunde, dass zwar ein Eisansatz einer Windenergieanlage im Park nicht zwangsläufig bedeuten muss, dass auch alle anderen Windenergieanlagen im Park einen Eisansatz aufweisen, dass aber die Wahrscheinlichkeit eines Eisansatzes bei den übrigen Windenergieanlagen desselben Parks hoch ist. Fehlprognosen dürften somit nur selten auftreten und sich damit im Gesamtertrag der Windenergieanlage über das Jahr kaum niederschlagen, wobei die Sicherheit, nämlich die Verhinderung eines Eisabwurfs mitunter signifikant erhöht werden kann.

Vorzugsweise wird eine Windenergieanlage, die wegen erkanntem Eisansatz oder Verdacht darauf angehalten wurde, ihre Gondel so ausrichten, dass ein möglichst großer Abstand zu durch Eisfall gefährdeten Bereichen, insbesondere zu Verkehrswegen und Gegenständen eingehalten wird. So wird nicht nur die Gefahr durch Eisabwurf verringert, sondern auch die Gefahr durch reinen Eisfall, wie er grundsätzlich auch bei anderen hohen Bauwerken auftreten kann.

Vorzugsweise wird eine Windenergieanlage verwendet, die einen beheizbaren Windsensor zur Messung der Windgeschwindigkeit aufweist und diesen zumindest im Falle eines Verdachts auf Eisansatz beheizt. Beispielsweise kann ein so genanntes Ultraschallanemometer verwendet werden. Somit soll auch für den Fall einer Eisbildung, die nicht nur an den Rotorblättern, sondern beispielsweise auch an dem Anemometer auftreten kann, für eine weiterhin verlässliche Messung der Windgeschwindigkeit gesorgt. Dementsprechend können dann weiterhin auch Eisansatzerkennungen, die eine verlässliche Windgeschwindigkeit benötigen, eingesetzt werden.

Vorzugsweise wird vorgeschlagen, einen Eissensor zu verwenden, der unmittelbar einen Eisansatz an der Windenergieanlage, insbesondere an einem oder mehreren der Rotorblätter misst. Eine solche Messung kann die oben beschriebenen Eiserkennungen ergänzen. Es ist zu beachten, dass die Verwendung eines Eissensors zunächst entsprechende Investitionskosten bedingt. Diese können sich gegebenenfalls schnell amortisieren, wenn aufgrund einer eindeutigen Aussage eines solchen Eissensors darüber, dass kein Eisansatz vorliegt, die Windenergieanlage betrieben werden kann, obwohl sie ansonsten vorsichtshalber hätte angehalten werden müssen.

Vorzugsweise kann in einem Windpark vorgesehen sein, nur einige oder eine der Windenergieanlagen mit einem solchen Eissensor auszustatten und daraus gewonnene Erkenntnisse über einen Eisansatz an andere Windenergieanlagen im Park zu übertragen, die nicht über einen Eissensor verfügen. Hierdurch können die Kosten für einen Eissensor auf mehrere Anlagen aufgeteilt werden. Vorzugsweise werden durch einen Eissensor gewonnene Erkenntnisse über einen Eisansatz zusammen mit den jeweils vorherrschenden Umgebungs- und/oder Betriebsbedingungen der jeweiligen Windenergieanlage ausgewertet, insbesondere abgespeichert, um eine Vorhersage eines Eisansatzes zu verbessern, insbesondere für die jeweilige Windenergieanlage zu individualisieren. Eine Eisansatzerkennung kann somit an Anlagentyp und Aufstellungsort jeweils angepasst werden, insbesondere durch ein entsprechendes lernfähiges Programm.

Nachfolgend wird die Erfindung exemplarisch anhand von Ausführungsbeispielen unter Bezugnahme auf die begleitenden Figuren näher erläutert.
- Fig. 1:: zeigt eine Windenergieanlage in einer perspektivischen Darstellung.
- Fig. 2:: zeigt den Verlauf eines Eisverdachtsindikators für unterschiedliche Windgeschwindigkeiten.
- Fig. 3:: zeigt den Verlauf eines Eisverdachtsindikators für zwei unterschiedliche Umgebungstemperaturen.
- Fig. 4:: veranschaulicht den Verlauf eines Eisverdachtsindikators einer Ausführungsform in Abhängigkeit eines beispielhaften Temperaturverlaufs.

Fig. 1 zeigt eine Windenergieanlage 1 mit einer Gondel 2, einem aerodynamischen Rotor 6, mit Rotorblättern 4, mit einem Spinner 5 und einem Turm 6.

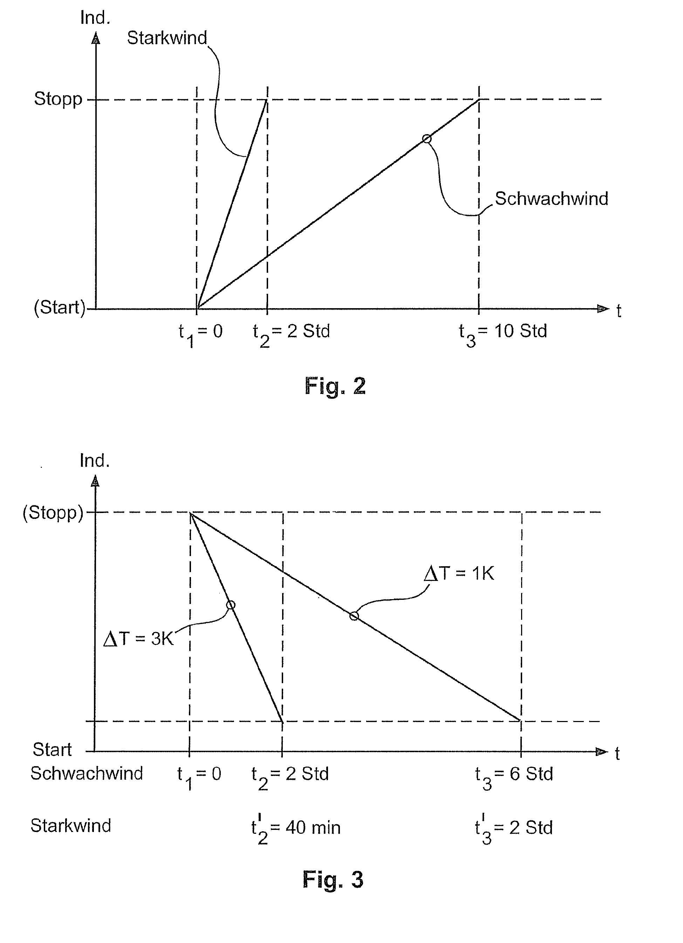

In der Fig. 2 ist der Verlauf des Eisverdachtsindikators, nämlich dessen Wert, über die Zeit für zwei Beispiele aufgetragen. Demnach wird unterschieden zwischen vorherrschenden Windgeschwindigkeiten, die als Starkwind bezeichnet werden können, einerseits und welchen, die als Schwachwind bezeichnet werden können, andererseits. Fig. 2 betrifft in beiden Beispielen den Fall, dass die Windenergieanlage in Betrieb ist und der Rotor der Windenergieanlage sich dreht, die Anlage also nicht angehalten ist. Zum Zeitpunkt t1 = 0 tritt ein Ereignis ein, das ein Hochzählen des Eisverdachtsindikators auslöst. Dies kann beispielsweise sein, dass die Umgebungstemperatur unter eine Grenztemperatur absinkt. Es kommt aber beispielsweise auch in Betracht, dass die Temperatur bereits unter der Grenztemperatur liegt und die vorherrschende Windgeschwindigkeit auf einen Wert fällt, so dass von einer Schwachwindsituation ausgegangen werden muss, oder dass die vorherrschende Windgeschwindigkeit auf einen Wert steigt, dass von einer Starkwindsituation ausgegangen werden muss.

Auf den Wert des Eisverdachtsindikators vor dem Zeitpunkt t1 kommt es nicht an. Dieser kann beispielsweise den Wert 0 aufweisen, oder dem Eisverdachtsindikator wird zum Zeitpunkt t1 überhaupt erst ein Wert zugewiesen.

Der Anfangswert des Eisverdachtsindikators kann auch als ein Wert angesehen werden, der zum Wiederanlaufen der Windenergieanlage in einem anderen Fall führt. Darauf kommt es in dem in Fig. 2 gezeigten Fall aber nicht an, so dass der Wert "Start" nur in Klammern gezeigt ist.

Jedenfalls liegt zum Zeitpunkt t1 eine Bedingung vor, aufgrund der der Eisverdachtsindikator kontinuierlich mit der Zeit erhöht wird. Die Erhöhung erfolgt für vorherrschenden Starkwind schneller als für vorherrschenden Schwachwind. Somit erreicht der Eisverdachtsindikator bei vorherrschendem Starkwind bereits zum Zeitpunkt t2 einen Wert, bei dem die Windenergieanlage angehalten wird. Dieser Wert ist in der Fig. 2 durch die waagrechte gestrichelte und mit Stopp bezeichnete Linie gekennzeichnet. Im Beispiel erreicht der Eisverdachtsindikator bei vorherrschendem Starkwind das Kriterium zum Anhalten der Windenergieanlage nach 2 Stunden. Im Falle des Schwachwindes wird das Kriterium zum Anhalten der Windenergieanlage erst zum Zeitpunkt t3 erreicht, der im Beispiel 10 Stunden beträgt.

Fig. 2 ist eine vereinfachte Darstellung, die im Wesentlichen davon ausgeht, dass die vorherrschenden Randbedingungen im Wesentlichen stationär sind.

Fig. 3 zeigt ebenfalls zwei beispielhafte Verläufe des Eisverdachtsindikators, aber für die Situation, dass die Windenergieanlage steht. Zum Zeitpunkt t1, der vereinfachend als 0 angegeben wird, liegen Kriterien vor, die dazu führen, dass der Eisverdachtsindikator verringert wird. Auch hier kommt es zunächst auf seinen Anfangswert nicht an und er kann dem Fall entsprechen, bei dem die Anlage angehalten wurde, weswegen an der Ordinate "Stopp" in Klammern dargestellt ist. Das Verringern, das auch als Herunterzählen bezeichnet werden kann, des Eisverdachtsindikators ist abhängig von einer Differenztemperatur, nämlich der aktuellen Umgebungstemperatur zu einer Grenztemperatur, wobei die Umgebungstemperatur größer sein muss als die Grenztemperatur. Diese Differenztemperatur ist in der Fig. 3 als ΔT angegeben. Der Darstellung liegt die Annahme zugrunde, dass stationäre Verhältnisse vorliegen, insbesondere dass die Differenztemperatur ΔT im einen Fall konstant auf 3 K und im anderen gezeigten Fall konstant auf 1 K ist.

Der Wert des Eisverdachtsindikators wird gemäß Fig. 3 entsprechend dem Integral der Differenztemperatur über die Zeit verringert. In den gezeigten Beispielen der Fig. 3 ist die Differenztemperatur somit ein konstanter Temperaturwert, nämlich 3 K in einem Fall oder 1 K im anderen Fall, der über die Zeit integriert wird. Im Falle der größeren Temperaturdifferenz von 3 K erreicht somit der Eisverdachtsindikator bereits zum Zeitpunkt t2 den Wert, bei dem die Anlage wieder gestartet wird, was durch das Wort "Start" angezeigt ist. Im gezeigten Beispiel wird die Anlage somit nach 2 Stunden wieder gestartet.

Im Falle der geringeren Temperaturdifferenz von nur 1 K erreicht der Eisverdachtsindikator erst bei T3 den Wert, bei dem die Anlage wieder gestartet werden kann. Da die Temperaturdifferenz hier nur ein Drittel des ersten Beispiels beträgt, wird T3 nach 6 Stunden erreicht.

Bei den gezeigten Verläufen wird eine Integrationszeitkonstante eingesetzt, die von der vorherrschenden Windsituation abhängt. Diese Integrationszeitkonstante ist bei vorherrschendem Starkwind größer, im gezeigten Beispiel nämlich um den Faktor 3, als bei vorherrschendem Schwachwind. Entsprechend erreicht der Eisverdachtsindikator im Falle von Starkwind dreimal so schnell den Wert, bei dem die Anlage wieder anläuft. Diese Werte sind als t2' = 40 Minuten für eine Temperaturdifferenz ΔT = 3 K bzw. t3' = 2 Stunden für eine Temperaturdifferenz von ΔT = 1 K in der Fig. 3 angegeben.

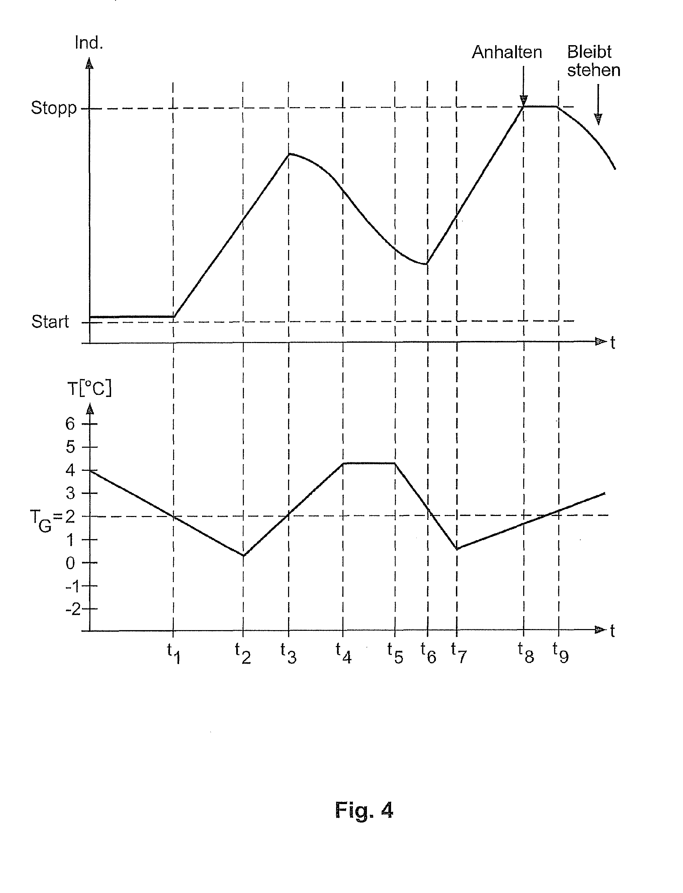

Gemäß Fig. 4 wird an einem Beispiel veranschaulicht, wie die Umgebungstemperatur den Verlauf des Eisverdachtsindikators einer Ausführungsform beeinflusst. Hierfür zeigt die Fig. 4 in der oberen Darstellung den Verlauf des Eisverdachtsindikators, wobei zunächst von einer in einem unsicheren Eiserkennungsbereich laufenden Anlage ausgegangen wird. Die Darstellung gilt sinngemäß auch, wenn die Anlage angehalten ist. Die untere Darstellung zeigt einen fiktiven Verlauf der Umgebungstemperatur. Der gezeigte Verlauf der Umgebungstemperatur wurde zum Zwecke einer Veranschaulichung ausgewählt und beansprucht nicht, einem möglichen realen Temperaturverlauf einer Umgebungstemperatur entsprechen zu können.

Im vorliegenden Beispiel wird eine Grenztemperatur von T_{G} = 2°C zugrunde gelegt. Die Ist-Temperatur beträgt zunächst etwa 4°C und liegt damit über der Grenztemperatur. Da der Eisverdachtsindikator zunächst noch nicht gesetzt ist bzw. einen Startwert aufweist und die Windenergieanlage in Betrieb ist und ihr Rotor sich dreht, hat die Temperatur zunächst keine Auswirkung auf den gezeigten Verlauf des Eisverdachtsindikators.

Zum Zeitpunkt t1 erreicht die Temperatur den Wert der Grenztemperatur und fällt weiter ab. Es besteht somit grundsätzlich die Gefahr eines Eisansatzes und der Eisverdachtsindikator beginnt somit vom Zeitpunkt t1 an zu steigen.

Zum Zeitpunkt t2 ist die Temperatur unterhalb der Grenztemperatur und steigt nun wieder an. Dies hat auf den Verlauf des Eisverdachtsindikators zunächst aber keinen Einfluss und er steigt weiter an.

Zum Zeitpunkt t3 überschreitet die Temperatur die Grenztemperatur und steigt weiter kontinuierlich an. Der Eisverdachtsindikator steigt somit ab dem Zeitpunkt t3 nicht weiter an, weil nicht mehr von einem Eisansatz bzw. der Entstehung eines Eisansatzes auszugehen ist. Vielmehr wird nun der Eisverdachtsindikator wieder verringert. Weil die Temperatur und damit auch die Differenztemperatur ansteigt, ergibt ein Integral hierüber im Grunde einen Verlauf zweiter Ordnung.

Zum Zeitpunkt t4 weist die Temperatur einen Wert deutlich oberhalb der Grenztemperatur auf und behält diesen Wert zunächst bei. Entsprechend ergibt sich eine Abnahme des Eisverdachtsindikators als linearer Abschnitt.

Zum Zeitpunkt t5 sinkt die Temperatur kontinuierlich ab und entsprechend wird der Eisverdachtsindikator nur noch immer langsamer verringert.

Zum Zeitpunkt t6 erreicht die Temperatur wieder die Grenztemperatur und sinkt weiter ab. Somit wird ab dem Zeitpunkt t6 der Eisverdachtsindikator wieder erhöht.

Zum Zeitpunkt t7 erhöht sich die Temperatur wieder, bleibt aber unter der Grenztemperatur. Der Eisverdachtsindikator erhöht sich somit unverändert weiter.

Zum Zeitpunkt t8 ist die Temperatur weiterhin unter der Grenztemperatur. Der Eisverdachtsindikator hat hier aber den Wert erreicht, der zum Anhalten der Windenergieanlage führt. Dies ist an der Ordinate mit dem Begriff "Stopp" gekennzeichnet.

Vom Zeitpunkt t8 an steigt die Temperatur zwar weiter an, bleibt aber zunächst unter der Grenztemperatur. Da die Anlage bereits angehalten ist, wird der Eisverdachtsindikator nicht weiter verändert, was in der Fig. 4 im oberen Abschnitt durch einen konstanten Wert angezeigt ist.

Zum Zeitpunkt t9 hat die Temperatur den Temperaturgrenzwert erreicht und steigt weiter an. Der Eisverdachtsindikator wird nun wieder reduziert, die Anlage bleibt aber angehalten. Wenn sich der Eisverdachtsindikator nun weiter reduziert, bis er den Wert Start, der kurz oberhalb der Abszisse eingezeichnet ist, erreicht, kann sie wieder anlaufen, was in der Fig. 4 aber nicht mehr weiter dargestellt ist.

Vereinfacht ausgedrückt werden die Funktionsweisen zum Erhöhen des Eisverdachtsindikators gemäß Fig. 2 und zum Verringern des Eisverdachtsindikators gemäß Fig. 3 in der Fig. 4 vereint. Somit werden diese Zusammenhänge der Fig. 4 vereint, was einer Ausführungsform entspricht. Grundsätzlich können aber auch die Zusammenhänge bzw. Funktionsweisen der Fig. 2 einerseits und der Fig. 3 andererseits getrennt voneinander eingesetzt werden.

Gemäß einer Ausführungsform ist es somit möglich, eine Eiserkennung bzw. Eisansatzerkennung um einen Betriebsstatus zu erweitern, der als Eisverdacht bezeichnet werden kann. Hierüber sollen insbesondere die Betriebssituationen erfasst werden, bei denen eventuell auftretende Vereisung nicht sicher erkannt würde. Grundsätzlich erfolgt eine Eisansatzerkennung durch Überwachung der Betriebskennlinien der Windenergieanlage und kann damit auf den Betriebsbereich der Windenergieanlage mit Leistungserzeugung beschränkt sein. Wenn die Windenergieanlage keine Leistung erzeugt, ist auch kein Abgleich mit den Betriebskennlinien bzw. dem Kennfeld möglich. Die Eisansatzerkennung kann somit unter bestimmten Bedingungen nur eingeschränkt funktionieren. Diese eingeschränkten Bedingungen werden nun mitberücksichtigt. Hierzu gehören:
- Schwachwind: Hier ist Eiserkennung bei Betrieb während sehr geringer Windgeschwindigkeiten, insbesondere unterhalb von ca. 3 bis 4 m/s, durch Überwachung der Betriebskennlinien nicht sicher möglich.
- Starkwind: Bei Betrieb während hoher Windgeschwindigkeiten über ca. 20 bis 25 m/s nimmt die Empfindlichkeit des bisherigen Erkennungsverfahrens ab und/oder kann oftmals durch vorhandene Betriebserfahrungen nicht verifiziert werden.
- Anlagenstopp bei betriebsbereiter Anlage
- Netzausfall

Somit ist der bisherige Erkennungsbereich der Eisansatzerkennung im Betrieb, der auch als sicherer Erkennungsbereich bezeichnet werden kann, unter Berücksichtigung einer Sicherheitsmarge auf Windgeschwindigkeiten zwischen ungefähr 4 m/s und 20 m/s beschränkt.

Verweildauern bei niedrigen Temperaturen, nämlich Umgebungstemperaturen unter +2°C, erhöhen den Vereisungsverdacht. Bei Temperaturen über +2°C wird dagegen der Vereisungsverdacht wieder abgebaut. Ebenso kann bei Betrieb der Windenergieanlage im sicheren Erkennungsbereich der Eisansatzerkennung der Vereisungsverdacht abgebaut werden.

Bei den vorgeschlagenen Verfahren handelt es sich insbesondere um ein Verfahren, das weniger eine sichere Eiserkennung vorschlägt, sondern vielmehr die Möglichkeit einer Eisentstehung berücksichtigt.

Vorzugsweise wird für den Betrieb bei Windgeschwindigkeiten unter 4 m/s davon ausgegangen, dass sich erst innerhalb von 10 Stunden eine kritische Eisstärke gebildet haben könnte. Entsprechend wird dies in der nachfolgenden Tabelle 1 unter dem Modus I berücksichtigt.

Für den Betrieb bei Starkwind wird aufgrund der höheren Anströmgeschwindigkeiten am Rotorblatt davon ausgegangen, dass sich bereits innerhalb von 2 Stunden eine kritische Eisschicht gebildet haben könnte. Diese Zusammenhänge werden entsprechend in der nachfolgenden Tabelle als Modus II berücksichtigt.

Bei einem automatischen Anlagenstopp, wie er beispielsweise aufgrund einer Schattenwurfabschaltung oder geringem Wind erfolgt, oder bei einem manuellen Anlagenstopp wie beispielsweise zu Wartungszwecken, wird davon ausgegangen, dass sich innerhalb von 10 Stunden eine kritische Eisschichtstärke gebildet haben könnte. Entsprechend wird auch dies gemäß der nachfolgenden Tabelle unter dem Modus I berücksichtigt.

Bei Netzausfall können von der Anlagensteuerung oftmals keine Wind- und Temperaturdaten erfasst werden. Es liegen aber die letzten Daten vor Netzausfall und die Daten bei Netzwiederkehr vor. Vorhandene Zählerstände der Eisansatzerkennung, insbesondere der Wert des Eisverdachtsindikators, bleiben ebenfalls erhalten. Die Zeiten mit Netzausfall werden in Abhängigkeit von dessen Dauer wie folgt berücksichtigt.

Netzausfallzeiten bis zu 2 Stunden werden mit dem Mittelwert aus der Temperatur zu Beginn des Netzausfalls und Temperatur bei Netzwiederkehr entsprechend dem Modus I wie in der Tabelle unten beschrieben berücksichtigt. Es wird somit mit diesem Temperaturmittelwert, der auch als Bestimmungstemperatur bezeichnet wurde, ein Eisverdachtsindikator hochgezählt bzw. erhöht, wenn dieser Temperaturmittelwert unter einer Grenztemperatur liegt. Liegt er über dieser Grenztemperatur, wird der Eisverdachtsindikator entsprechend verringert. Dies erfolgt entsprechend für die Dauer der Netzausfallzeit als zugrunde gelegte Zeit.

Netzausfallzeiten zwischen 2 und 10 Stunden werden zur Abdeckung zwischenzeitlicher Temperaturabsenkungen mit dem Mittelwert aus der Temperatur zu Beginn des Netzausfalls und der Temperatur bei Netzwiederkehr, abzüglich 2 K entsprechend dem unten in der nachfolgenden Tabelle beschriebenen Modus I berücksichtigt.

Bei Netzausfallzeiten beispielsweise über 10 Stunden wird davon ausgegangen, dass eine zuverlässige Aussage über den zurückliegenden Zeitraum nicht möglich ist. Es wird hierfür unter Berücksichtigung einer Sicherheitsmarge bei allen Temperaturen unter +5°C bei Netzwiederkehr vom Vereisungsverdacht ausgegangen. Die Windenergieanlage bleibt somit zunächst angehalten, bis eine Vereisung ausgeschlossen werden kann.

Die Umsetzung für den beschriebenen Modus I und den beschriebenen Modus II erfolgt über einen Zähler, der auch als Eisverdachtsindikator oder als Verdachtszähler bezeichnet werden kann und der bei Vereisungsverdacht hochzählt und ohne Vereisungsverdacht wieder herunterzählt. Dabei werden entsprechend der Verdachtssituation die Zeiten zwischen Modus I und Modus II unterschieden.

Bei 30 Minuten Betrieb ohne Eiserkennung im sicheren Erkennungsbereich der Eisansatzerkennung, also bei einer Erkennung unter Verwendung eines Leistungskurvenverfahrens, bei dem die gemessene Leistungskurve mit einer zu erwartenden verglichen wird, ist der Vereisungsverdacht abgebaut. Liegt also eine sichere Erkennung vor, reichen 30 Minuten aus, unabhängig von dem verwendeten Modus.

Gemäß einer Ausführungsform wird bei Außentemperaturen über +2°C die +2°C überschreitende Differenz der aktuellen Außentemperatur über die Zeit aufsummiert bzw. aufintegriert. Ein Wiederanlauf erfolgt dann erst nach Ablauf eines Differenztemperatur-Zeitintegrals. So erfolgt ein Wiederanlauf beispielsweise bei 360°C min. Dies kann beispielsweise bedeuten, dass ein Wiederanlauf nach 6 Stunden bei einer Umgebungstemperatur von +3°C oder nach 2 Stunden bei einer Umgebungstemperatur von +5°C erfolgt. In Modus II erfolgt der Wiederanlauf für diesen Fall bereits nach 120°C min.

| | Modus I / Dauer | Modus II / Dauer |
|---|---|---|
| Vereisungsverdacht (hochzählen) | 600 min | 120 min |
| Betrieb im sicheren Erkennungsbereich (runterzählen) | 30 min | 30 min |
| Differenztemperatur-Zeitintegral für Außentemperatur > 2°C (runterzählen) | 360°Cmin | 120°Cmin |

Die in obiger Tabelle aufgeführten Zeiten entsprechen denen für einen vollständigen Verdachtsaufbau bzw. Verdachtsabbau. Zwischenstadien werden entsprechend proportional gewertet.

Bei Übergang vom Betrieb der Windenergieanlage mit laufenden Rotor in den Stillstand und umgekehrt werden die Zählerstände für Eisansatzerkennung und für Vereisungsverdacht entsprechend übergeben bzw. beibehalten. Damit soll sichergestellt werden, dass Windenergieanlagen auch bei längerer Verweildauer außerhalb eines als sicher angenommenen Erkennungsbereichs der üblichen Eisansatzerkennung wegen unsicherem Vereisungszustand mit Vereisungsverdacht gestoppt werden bzw. der automatische Neustart verhindert werden kann. Unter eine solche längere Verweildauer gehört beispielsweise eine von 10 Stunden oder mehr bei vorherrschenden Windbedingungen unter 4 m/s, oder eine Verweildauer von 2 Stunden oder mehr bei vorherrschenden Windgeschwindigkeiten über 20 m/s.

## Patentansprüche

1. Verfahren zum Betreiben einer Windenergieanlage (1) mit einer Gondel (2) mit einem elektrischen Generator zum Erzeugen elektrischen Stroms und einem mit dem Generator gekoppelten aerodynamischen Rotor (3) mit einem oder mehreren Rotorblättern (4), umfassend die Schritte
- Betreiben der Windenergieanlage (1), wenn ein Eisansatz an den Rotorblättern (4) sicher ausgeschlossen werden kann, und
- Anhalten der Windenergieanlage (1), wenn ein Eisansatz an den Rotorblättern (4) erkannt wird, und
- zeitverzögertes Anhalten bzw. Verhindern eines Wiederanlaufs der Windenergieanlage (1), wenn ein Eisansatz nicht erkannt wurde, aber zu erwarten ist bzw. nicht ausgeschlossen werden kann, wobei die Zeitverzögerung von dem Zeitpunkt aus startet, an dem der Eisansatz zu erwarten war, und/oder
- zeitverzögertes Wiederanlaufenlassen der Windenergieanlage (1) wenn eine Anhaltebedingung, die zum Anhalten der Windenergieanlage (1) geführt hat, wieder weggefallen ist, und ein Eisansatz nicht erkannt wurde und ein Eisansatz oder die Bildung eines Eisansatzes nicht zu erwarten ist, wobei die Zeitverzögerung von dem Zeitpunkt aus startet, an dem der Eisansatz nicht erkannt wurde und nicht zu erwarten war,
**dadurch gekennzeichnet,**
- **dass** das Anhalten bzw. Verhindern des Wiederanlaufs der Windenergieanlage (1) und/oder das Wiederanlaufenlassen der Windenergieanlage (1) abhängig von einem Eisverdachtsindikator erfolgt, der als Maß für die Wahrscheinlichkeit eines Eisansatzes bestimmt bzw. verändert wird, wobei der Eisverdachtsindikator als Zähler ausgebildet ist und
- seinen Wert in eine erste Richtung verändert, insbesondere erhöht, wenn Umgebungsbedingungen und/oder Betriebsbedingungen der Windenergieanlage (1) einen Eisansatz begünstigen und/oder auf einen Eisansatz hindeuten, insbesondere, wenn die Umgebungstemperatur unter einer Grenztemperatur, liegt und/oder
- seinen Wert in eine zweite Richtung verändert, insbesondere verringert, wenn Umgebungsbedingungen oder Betriebsbedingungen der Windenergieanlage (1) darauf hindeuten und/oder begünstigen, dass ein Eisansatz nicht vorliegt oder sich reduziert, insbesondere, wenn die Umgebungstemperatur über der Grenztemperatur liegt, und
die Grenztemperatur kurz oberhalb des Gefrierpunktes liegt, insbesondere die Temperatur im Bereich von 1 bis 4°C, vorzugsweise etwa 2°C beträgt,
- wobei eine Veränderung des Wertes des Eisverdachtsindikators mit einer von den Umgebungsbedingungen und/oder Betriebsbedingungen der Windenergieanlage (1) abhängigen Geschwindigkeit erfolgt, insbesondere, dass
- der Wert bei vorherrschendem Schwachwind langsamer erhöht wird, als bei vorherrschendem Starkwind, wenn die Anlage im Betreib ist und/oder, dass
- die Windenergieanlage (1) bei vorherrschendem Schwachwind nach größerer Zeitverzögerung angehalten wird, als bei vorherrschendem Starkwind und/oder, dass
- der Wert je langsamer verringert wird, je geringer die Umgebungstemperatur ist, insbesondere dass, der Wert proportional zu einem Integral der Zeit über die Differenz der Umgebungstemperatur zur Grenztemperatur ist und/oder dass
- die Zeitverzögerung, nach der die Windenergieanlage (1) wieder anläuft, je geringer ist, je größer die Umgebungstemperatur ist.

2. Verfahren nach einem der vorstehenden Ansprüche, **dadurch gekennzeichnet, dass** die Windenergieanlage (1) an ein elektrisches Netz gekoppelt ist und im Falle eines Netzausfalls die Windenergieanlage angehalten wird und bei Netzwiederkehr ein Wiederanlaufen der Windenergieanlage abhängig von einer Bemessungstemperatur erfolgt, die von der Umgebungstemperatur zu Beginn des Netzausfalls und der Umgebungstemperatur bei Netzwiederkehr abhängt.

3. Verfahren nach Anspruch 2, **dadurch gekennzeichnet, dass**
- die Bemessungstemperatur als Mittelwert aus der Umgebungstemperatur zu Beginn des Netzausfalls und der Umgebungstemperatur bei Netzwiederkehr berechnet wird, wenn der Netzausfall nicht mehr als eine erste Ausfallzeit, insbesondere nicht mehr als 2 Stunden beträgt und/oder
- die Bemessungstemperatur als Mittelwert aus der Umgebungstemperatur zu Beginn des Netzausfalls und der Umgebungstemperatur bei Netzwiederkehr abzüglich eines Temperatur-Sicherheitswertes, insbesondere von 2 Kelvin, berechnet wird, wenn der Netzausfall länger als die erste Ausfallzeit betrug.

4. Verfahren nach einem der vorstehenden Ansprüche, **dadurch gekennzeichnet, dass** die Windenergieanlage in einem Windpark angeordnet ist und angehalten wird, wenn wenigstens eine weitere Windenergieanlage dieses Windparks wegen Eisansatz oder Verdacht auf Eisansatz angehalten wird.

5. Verfahren nach einem der vorstehenden Ansprüche, **dadurch gekennzeichnet, dass** die wegen erkanntem Eisansatz oder Verdacht auf Eisansatz angehaltene Windenergieanlage (1) ihre Gondel (2) so ausrichtet, dass ein möglichst großer Abstand zu durch Eisfall gefährdeten Bereichen eingehalten wird.

6. Verfahren nach einem der vorstehenden Ansprüche, **dadurch gekennzeichnet, dass** die Windenergieanlage (1) einen beheizbaren Windsensor, insbesondere ein Ultraschallanemometer, zur Messung der Windgeschwindigkeit aufweist und dass der Windsensor beheizt wird, wenn ein Eisansatz erkannt wurde und/oder wenn ein Eisansatz nicht ausgeschlossen werden kann.

7. Verfahren nach einem der vorstehenden Ansprüche, **dadurch gekennzeichnet, dass** die Windenergieanlage (1) einen Eissensor aufweist und ein Eisansatz durch direktes Messen mit Hilfe des Eissensors erfasst wird.

8. Windenergieanlage (1) mit einer Gondel (2) mit einem elektrischen Generator zum Erzeugen elektrischen Stroms und einem mit dem Generator gekoppelten aerodynamischen Rotor (3) mit einem oder mehreren Rotorblättern (4), wobei die Windenergieanlage zum Betrieb mit einem Verfahren nach einem der vorstehenden Ansprüche vorbereitet ist.

9. Windpark mit wenigstens einer Windenergieanlage (1) nach Anspruch 8.

## Claims

1. Method for operating a wind turbine (1) having a pod (2) having an electrical generator for producing electrical current and an aerodynamic rotor (3) which is coupled to the generator (3) and which has one or more rotor blades (4), comprising the steps of:
- operating the wind turbine (1) when an accumulation of ice on the rotor blades (4) can be excluded in a reliable manner, and
- stopping the wind turbine (1) when an accumulation of ice has been identified on the rotor blades (4), and
- time-delayed stopping or prevention of the wind turbine (1) from starting up again when an accumulation of ice has not been identified, but may be anticipated or cannot be excluded, the time delay starting from the time at which the accumulation of ice was supposed to be anticipated, and/or
- time-delayed restarting of the wind turbine (1) when a stopping condition which has led to the stoppage of the wind turbine (1) has been eliminated and an accumulation of ice has not been identified and an accumulation of ice or the formation of an accumulation of ice is not anticipated, the time delay beginning from the time at which the accumulation of ice was not identified and was not supposed to be anticipated,
**characterised in that**
- the stopping or preventing of the wind turbine (1) from restarting and/or the restarting of the wind turbine (1) is/are carried out independently of a suspected ice indicator which as a measurement for the probability of an accumulation of ice is determined or changed, the suspected ice indicator being constructed as a counter, and
- changing the value thereof in a first direction, in particular increasing it, when ambient conditions and/or operating conditions of the wind turbine (1) promote an accumulation of ice and/or indicate an accumulation of ice, in particular when the ambient temperature is below a limit temperature, and/or
- changing the value thereof in a second direction, in particular decreasing it, when ambient conditions or operating conditions of the wind turbine (1) indicate and/or promote the fact that an accumulation of ice is not present or is reducing, in particular when the ambient temperature is above the limit temperature, and
the limit temperature is slightly above freezing point, in particular the temperature is in the range from 1 to 4°C, preferably approximately 2°C,
- a change of the value of the suspected ice indicator being carried out at a speed which is dependent on the ambient conditions and/or operating conditions of the wind turbine (1), in particular **in that**,
- in the event of weak wind, the value is increased more slowly than in the event of strong wind, when the installation is operated, and/or **in that**,
- in the event of weak wind, the wind turbine (1) is stopped after a longer time delay than in the event of strong wind and/or **in that**
- the value is decreased more slowly, the lower the ambient temperature is, in particular **in that** the value is proportional to an integral of the time over the difference of the ambient temperature in relation to the limit temperature and/or **in that**
- the time delay after which the wind turbine (1) is started again is smaller, the greater the ambient temperature is.

2. Method according to any one of the preceding claims, **characterised in that** the wind turbine (1) is coupled to an electrical network and, in the event of a network failure, the wind turbine is stopped and, in the event of the network being restored, the wind turbine is restarted depending on a calculation temperature which is dependent on the ambient temperature at the beginning of the network failure and the ambient temperature when the network is restored.

3. Method according to claim 2, **characterised in that**
- the calculation temperature is calculated as a mean value from the ambient temperature at the beginning of the network failure and the ambient temperature when the network is restored, when the network failure is no more than a first failure time, in particular is no more than two hours, and/or
- the calculation temperature is calculated as a mean value from the ambient temperature at the beginning of the network failure and the ambient temperature when the network is restored minus a temperature safety value, in particular of 2 Kelvin, if the network failure was longer than the first failure time.

4. Method according to any one of the preceding claims, **characterised in that** the wind turbine is arranged in a wind park and is stopped when at least one other wind turbine of this wind park is stopped as a result of the accumulation of ice or a suspected accumulation of ice.

5. Method according to any one of the preceding claims, **characterised in that** the wind turbine (1) which has been stopped as a result of an identified accumulation of ice or a suspected accumulation of ice orientates its pod (2) in such a manner that the greatest possible spacing is maintained with respect to regions which are endangered by ice fall.

6. Method according to any one of the preceding claims, **characterised in that** the wind turbine (1) has a heatable wind sensor, in particular an ultrasound anemometer, for measuring the wind speed and **in that** the wind sensor is heated when an accumulation of ice has been identified and/or when an accumulation of ice cannot be excluded.

7. Method according to any one of the preceding claims, **characterised in that** the wind turbine (1) has an ice sensor and an accumulation of ice is detected by means of direct measurement using the ice sensor.

8. Wind turbine (1) having a pod (2) having an electrical generator for producing electrical current and an aerodynamic rotor (3) which is coupled to the generator and which has one or more rotor blades (4), the wind turbine being provided for operation with a method according to any one of the preceding claims.

9. Wind park having at least one wind turbine (1) according to claim 8.

## Revendications

1. Procédé de fonctionnement d'une éolienne (1) avec une nacelle (2) comportant un générateur électrique pour la production d'un courant électrique et un rotor (3) aérodynamique couplé au générateur avec une ou plusieurs pales de rotor (4), comprenant les étapes suivantes
- le fonctionnement de l'éolienne (1) si un dépôt de glace sur les pales de rotor (4) peut être exclu avec certitude, et
- l'arrêt de l'éolienne (1) si un dépôt de glace sur les pales de rotor (4) est détecté, et
- l'arrêt en différé, respectivement l'empêchement d'un redémarrage de l'éolienne (1), si un dépôt de glace n'a pas été détecté mais est à escompter, respectivement ne peut pas être exclu, la temporisation commençant à partir du moment où le dépôt de glace était à escompter et/ou
- l'autorisation de redémarrage en différé de l'éolienne (1) si une condition d'arrêt qui a mené à l'arrêt de l'éolienne (1) a de nouveau disparu, et un dépôt de glace n'a pas été détecté et un dépôt de glace ou la formation d'un dépôt de glace n'est pas à escompter, la temporisation commençant à partir du moment où le dépôt de glace n'a pas été détecté et n'était pas à escompter,
**caractérisé en ce que**
- l'arrêt ou l'empêchement du redémarrage de l'éolienne (1) et/ou l'autorisation du redémarrage de l'éolienne (1) est effectuée en fonction d'un indicateur de soupçon de glace qui est déterminé ou modifié pour servir de mesure de la probabilité d'un dépôt de glace, l'indicateur de soupçon de glace étant réalisé sous la forme d'un compteur
et
- modifiant sa valeur dans une première direction, en particulier l'augmentant, si des conditions ambiantes et/ou des conditions de fonctionnement de l'éolienne (1) favorisent un dépôt de glace et/ou indiquent un dépôt de glace, en particulier si la température ambiante se trouve sous une température limite et/ou
- modifiant sa valeur dans une seconde direction, en particulier la diminuant, si des conditions ambiantes ou des conditions de fonctionnement de l'éolienne (1) indiquent et/ou favorisent le fait qu'un dépôt de glace ne se présente pas ou se réduit, en particulier si la température ambiante se trouve au-dessus de la température limite, et
la température limite se trouve juste au-dessus du point de congélation, en particulier la température est comprise dans la plage de 1 à 4 °C, de préférence s'élève à environ 2 °C,
- dans lequel une modification de la valeur de l'indicateur de soupçon de glace est réalisée à une vitesse dépendant des conditions ambiantes et/ou des conditions de fonctionnement de l'éolienne (1), en particulier **en ce que**
- la valeur est augmentée plus lentement en cas de vent faible prédominant qu'en cas de vent fort prédominant si l'installation est en fonctionnement et/ou **en ce que**
- l'éolienne (1) est arrêtée en cas de vent faible prédominant après une temporisation plus importante qu'en cas de vent fort prédominant et/ou **en ce que**
- plus la valeur est réduite lentement, plus la température ambiante est faible, en particulier **en ce que** la valeur est proportionnelle à une intégrale du temps sur la différence de la température ambiante par rapport à la température limite et/ou **en ce que**
- plus la temporisation, après laquelle l'éolienne (1) redémarre, est faible, plus la température ambiante est grande.

2. Procédé selon l'une quelconque des revendications précédentes, **caractérisé en ce que** l'éolienne (1) est couplée à un réseau électrique et l'éolienne est arrêtée en cas de panne de réseau et un redémarrage de l'éolienne est réalisé en fonction d'une température de mesure en cas de retour du réseau, qui dépend de la température ambiante au début de la panne de réseau et de la température ambiante en cas de retour du réseau.

3. Procédé selon la revendication 2, **caractérisé en ce que**
- la température de mesure est calculée comme valeur moyenne à partir de la température ambiante au début de la panne de réseau et de la température ambiante en cas de retour du réseau si la panne de réseau n'est pas supérieure à une première durée de panne, en particulier pas supérieure à 2 heures et/ou
- la température de mesure est calculée comme valeur moyenne à partir de la température ambiante au début de la panne de réseau et de la température ambiante en cas de retour de réseau déduction faite d'une valeur de sécurité de température, en particulier de 2 kelvins, si la panne de réseau était plus longue que la première durée de panne.

4. Procédé selon l'une quelconque des revendications précédentes, **caractérisé en ce que** l'éolienne est agencée dans un parc éolien et est arrêtée si au moins une autre éolienne de ce parc éolien est arrêtée à cause d'un dépôt de glace ou d'un soupçon de dépôt de glace.

5. Procédé selon l'une quelconque des revendications précédentes, **caractérisé en ce que** l'éolienne (1) arrêtée à cause d'un dépôt de glace détecté ou d'un soupçon de dépôt de glace oriente sa nacelle (2) de sorte qu'une distance aussi grande que possible par rapport aux zones mises en danger par une chute de glace soit respectée.

6. Procédé selon l'une quelconque des revendications précédentes, **caractérisé en ce que** l'éolienne (1) présente un capteur de vent, en particulier un anémomètre à ultrasons, pouvant être chauffé, pour la mesure de la vitesse du vent et **en ce que** le capteur de vent est chauffé si un dépôt de glace a été détecté et/ou si un dépôt de glace ne peut pas être exclu.

7. Procédé selon l'une quelconque des revendications précédentes, **caractérisé en ce que** l'éolienne (1) présente un capteur de glace et un dépôt de glace est détecté par mesure directe à l'aide du capteur de glace.

8. Eolienne (1) avec une nacelle (2) comprenant un générateur électrique pour la production d'un courant électrique et un rotor (3) aérodynamique couplé au générateur avec une ou plusieurs pales de rotor (4), l'éolienne étant préparée pour fonctionner avec un procédé selon l'une quelconque des revendications précédentes.

9. Parc éolien avec au moins une éolienne (1) selon la revendication 8.
